# EUROPÄISCHE PATENTSCHRIFT

(11) **EP 1 848 248 B1**
(45) Veröffentlichungstag und Bekanntmachung des Hinweises auf die Patenterteilung: **15.10.2008**
(21) Anmeldenummer: 06405172.5
(22) Anmeldetag: 21.04.2006
(51) Int. Cl.: H05B 7/144, H05B 7/00

(54) **Lichtbogenofenspeisevorrichtung**
Arc furnace power supply
Dispositif d'alimentation pour four à arc

(43) Veröffentlichungstag der Anmeldung: 24.10.2007
(73) Patentinhaber: ABB Schweiz AG, 5400 Baden (CH)
(72) Erfinder: Sager, Daniel, 5415 Nussbaumen (HK); Suh, Yongsug, 5417 Untersiggenthal (CH); Lee, Yong Joong, 5620 Bremgarten (CH); Nordborg, Henrik, CH-5405 Baden (CH)
(74) Vertreter: ABB Patent Attorneys

(56) Entgegenhaltungen:
- DE-B- 1 159 112
- GB-A- 1 243 162
- US-A- 3 389 189
- US-B1- 6 421 366
- US-B1- 6 687 284

## Beschreibung

### Technisches Gebiet

Die Erfindung bezieht sich auf das Gebiet der Lichtbogenöfen. Sie geht aus von einer Lichtbogenofenspeisevorrichtung gemäss dem Oberbegriff des unabhängigen Anspruchs.

### Stand der Technik

Lichtbogenöfen werden heute hauptsächlich zum Erwärmen und Schmelzen von Metallen, insbesondere Stahl oder Aluminium, verwendet. Ein solcher Lichtbogenofen weist dazu einen Schmelztiegel zur Aufnahme des Erwärmungs- bzw. Schmelzgutes auf. Ein solcher Lichtbogenofen wird typischerweise von einer Lichtbogenofenspeisevorrichtung mit Energie zur Erwärmung bzw. zum Schmelzen versorgt. Eine geeignete Lichtbogenofenspeisevorrichtung ist in der EP 1 174 004 B1 angegeben. Darin weist die Lichtbogenofenspeisevorrichtung einen Gleichrichter auf, welcher Gleichrichter wechselspannungsseitig mit einem elektrischen Wechselspannungsnetz verbindbar ist. Gleichspannungsseitig ist der Gleichrichter mit einem Gleichspannungskreis verbunden. Zudem umfasst die Lichtbogenofenspeisevorrichtung einen Wechselrichter, welcher Wechselrichter gleichspannungsseitig mit dem Gleichspannungskreis und wechselspannungsseitig mit mindestens einer Lichtbogenelektrode verbunden ist. Der Wechselrichter der EP 1 174 004 B1 ist ferner als ein eine sinusförmige Wechselspannung an die Lichtbogenelektrode anlegender Wechselrichter ausgebildet.

Problematisch bei einer vorstehend beschriebenen Lichtbogenofenspeisevorrichtung ist, dass durch das Anlegen der sinusförmigen Wechselspannung an die Lichtbogenelektrode mittels des Wechselrichters der dadurch erzeugte Lichtbogen an der Lichtbogenelektrode instabil werden kann und somit nicht mehr in gewünschter Weise gleichmässig brennt. Damit ist aber eine ausreichende und gleichmässige Erwärmung des Erwärmungsgutes bzw. ein ausreichendes und gleichmässiges Schmelzen des Schmelzgutes nicht mehr gewährleistet.

### Darstellung der Erfindung

Aufgabe der Erfindung ist es deshalb, eine Lichtbogenofenspeisevorrichtung bereitzustellen, mit welcher ein stabiler und gleichmässiger Lichtbogen erzeugt werden kann. Diese Aufgabe wird durch die Merkmale des Anspruchs 1 gelöst. In den abhängigen Ansprüchen sind vorteilhafte Weiterbildungen der Erfindung angegeben.

Die erfindungsgemässe Lichtbogenofenspeisevorrichtung umfasst einen Gleichrichter, welcher Gleichrichter wechselspannungsseitig mit einem elektrischen Wechselspannungsnetz verbindbar ist. Gleichspannungsseitig ist der Gleichrichter mit einem Gleichspannungskreis verbunden. Weiterhin weist die Lichtbogenofenspeisevorrichtung einen Wechselrichter auf, welcher Wechselrichter gleichspannungsseitig mit dem Gleichspannungskreis und wechselspannungsseitig mit mindestens einer Lichtbogenelektrode verbunden ist. Erfindungsgemäss ist der Wechselrichter als ein eine rechteckförmige Wechselspannung an die Lichtbogenelektrode anlegender Wechselrichter ausgebildet. Durch die an die Lichtbogenelektrode mittels des Wechselrichters angelegte rechteckförmige Wechselspannung reduziert sich der Lichtbogenwiderstand im Nulldurchgang des Lichtbogenelektrodenstromes in signifikanter Weise und der Stromgradient di/dt erhöht sich im Nulldurchgang des Lichtbogenelektrodenstromes, wodurch der Lichtbogen vorteilhaft stabilisiert werden kann und damit gleichmässiger brennt.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Lichtbogenofenspeisevorrichtung,
- Fig. 2: eine zweite Ausführungsform einer erfindungsgemässen Lichtbogenofenspeisevorrichtung,
- Fig. 3: eine dritte Ausführungsform einer erfindungsgemässen Lichtbogenofenspeisevorrichtung und
- Fig. 4: eine vierte Ausführungsform einer erfindungsgemässen Lichtbogenofenspeisevorrichtung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

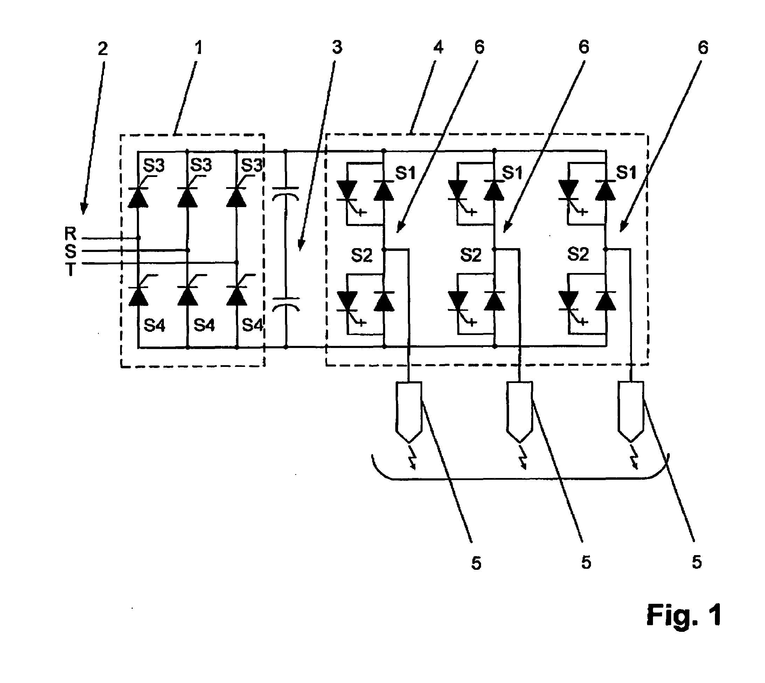

In Fig. 1 ist eine erste Ausführungsform der erfindungsgemässen Lichtbogenofenspeisevorrichtung dargestellt. Darin umfasst die Lichtbogenofenspeisevorrichtung einen Gleichrichter 1, welcher Gleichrichter wechselspannungsseitig mit einem elektrischen Wechselspannungsnetz 2 verbindbar ist. Die Verbindung kann direkt über einen der Übersichtlichkeit halber nicht dargestellten Netzschalter und/oder über einen oder mehrere Transformatoren mit entsprechenden Spannungsebenen erfolgen. Gleichspannungsseitig ist der Gleichrichter 1 gemäss Fig. 1 mit einem Gleichspannungskreis 3 verbunden. Der Gleichspannungskreis 3 kann durch einen oder mehrere kapazitive Energiespeicher, wie in Fig. 1 beispielhaft gezeigt, gebildet sein. Weiterhin weist die Lichtbogenofenspeisevorrichtung einen Wechselrichter 4 auf, welcher Wechselrichter 4 gleichspannungsseitig mit dem Gleichspannungskreis 3 und wechselspannungsseitig mit mindestens einer Lichtbogenelektrode 5 verbunden ist, wobei in Fig. 1 beispielhaft drei mit dem Wechselrichter 4 verbundene Lichtbogenelektroden 5 vorgesehen sind. Erfindungsgemäss ist der Wechselrichter 4 als ein eine rechteckförmige Wechselspannung an die Lichtbogenelektrode anlegender Wechselrichter ausgebildet. Der Wechselrichter 4 ist somit derart ausgeführt, dass dieser eine rechteckförmige Wechselspannung erzeugt, welche dann an der oder den Lichtbogenelektroden 5 anliegt. Durch die an die Lichtbogenelektrode 5 mittels des Wechselrichters 4 angelegte rechteckförmige Wechselspannung reduziert sich der Lichtbogenwiderstand im Nulldurchgang des Lichtbogenelektrodenstromes in signifikanter Weise und der Stromgradient di/dt erhöht sich im Nulldurchgang des Lichtbogenelektrodenstromes, wodurch der Lichtbogen vorteilhaft stabilisiert werden kann und damit gleichmässiger brennt.

Vorzugsweise entspricht die Frequenz der rechteckförmigen Wechselspannung im wesentlichen der Frequenz der Wechselspannung des elektrischen Wechselspannungsnetzes 2, wodurch ein besonders stabiler und gleichmässig brennender Lichtbogen erzielt werden kann.

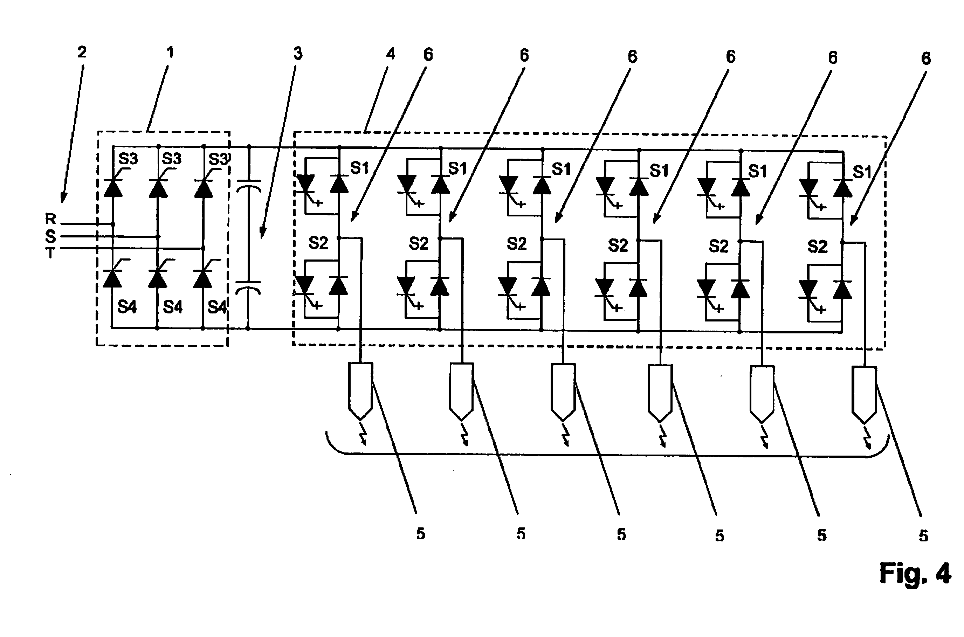

Gemäss Fig. 1 weist der Wechselrichter 4 für jede Lichtbogenelektrode 5 ein zugehöriges Wechselrichterzweigpaar 6 auf, wobei jedes Wechselrichterzweigpaar 6 zwei in Serie geschaltete ansteuerbare bidirektionale Leistungshalbleiterschalter S1, S2 aufweist und die jeweilige Lichtbogenelektrode 5 mit dem Verbindungspunkt der zwei in Serie geschalteten ansteuerbaren bidirektionalen Leistungshalbleiterschalter S1, S2 verbunden ist. Im Falle mehrerer Lichtbogenelektroden 5 sind die zugehörigen Wechselrichterzweigpaare 6 parallel geschaltet sind. Zudem ist jedes Wechselrichterzweigpaar 6 parallel mit dem Gleichspannungskreis 3 verbunden. Der jeweilige ansteuerbare bidirektionale Leistungshalbleiterschalter S1, S2 ist insbesondere gebildet durch einen Gate-Turn-Off Thyristor oder durch einen Bipolartransistor mit isoliert angeordneter Gateelektrode (IGBT) oder durch einen integrierten Thyristor mit kommutierter Ansteuerelektrode (IGCT) und durch eine zu dem Gate-Turn-Off Thyristor oder Bipolartransistor oder Thyristor mit kommutierter Ansteuerelektrode antiparallel geschaltete Diode. Es ist aber auch denkbar einen vorstehend genannten ansteuerbaren bidirektionalen Leistungshalbleiterschalter S1, S2 beispielsweise als Leistungs-MOSFET mit zusätzlich antiparallel geschalteter Diode auszuführen. Mittels des jeweiligen Wechselrichterzweigpaars 6 ist es vorteilhaft möglich, die rechteckförmige Wechselspannung an der zugehörigen Lichtbogenelektrode 5 bezüglich der Amplitude und Phasenlage einzustellen und dadurch die Stabilität und ein gleichmässiges Brennen des Lichtbogens entsprechend zu beeinflussen. Ergänzend sind in einer vierten Ausführungsform der erfindungsgemässen Lichtbogenofenspeisevorrichtung gemäss Fig. 4 beispielhaft sechs mit dem Wechselrichter 4 verbundene Lichtbogenelektroden 5 vorgesehen, so dass dann sechs Wechselrichterzweigpaare 6 vorhanden sind.

Gemäss Fig. 1 und Fig. 4 weist der Gleichrichter 1 für jede Phase R, S, T des elektrischen Wechselspannungsnetzes 2 eine Serienschaltung aus zwei ansteuerbaren unidirektionalen Leistungshalbleiterschaltern S3, S4 auf. Die jeweiligen Serienschaltungen sind dabei parallel geschaltet und parallel mit dem Gleichspannungskreis 3 verbunden. Der jeweilige ansteuerbare unidirektionale Leistungshalbleiterschalter S3, S4 ist insbesondere gebildet durch einen Gate-Turn-Off Thyristor oder durch einen Bipolartransistor mit isoliert angeordneter Gateelektrode (IGBT) oder durch einen integrierten Thyristor mit kommutierter Ansteuerelektrode (IGCT). Es ist aber auch denkbar einen vorstehend genannten ansteuerbaren unidirektionalen Leistungshalbleiterschalter S3, S4 beispielsweise als Leistungs-MOSFET auszubilden.

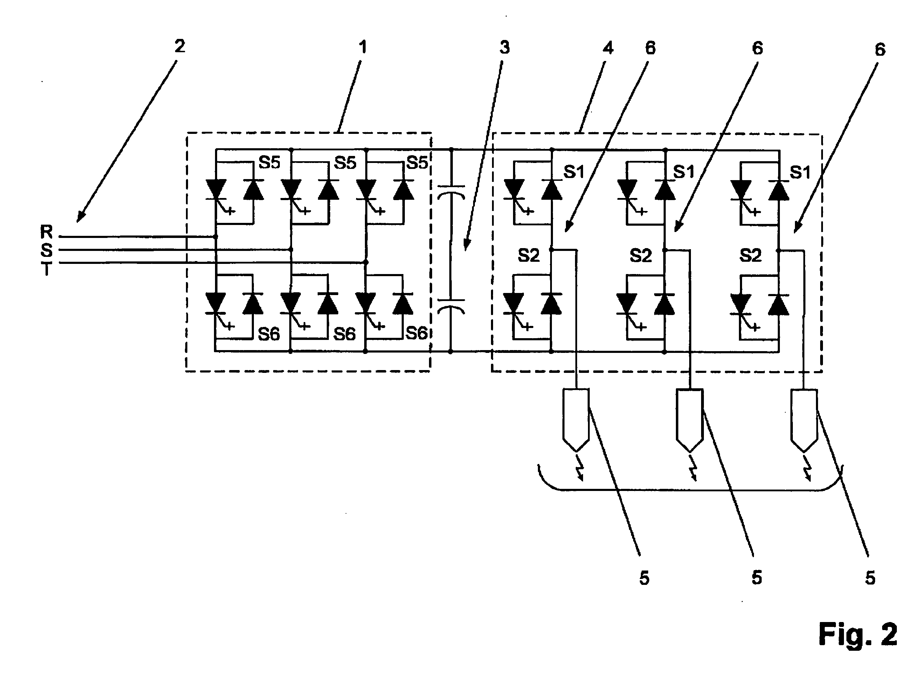

In Fig. 2 ist eine zweite Ausführungsform der erfindungsgemässen Lichtbogenofenspeisevorrichtung gezeigt. Im Unterschied zur ersten Ausführungsform nach Fig. 1 weist der Gleichrichter 1 für jede Phase R, S, T des elektrischen Wechselspannungsnetzes 2 eine Serienschaltung aus zwei ansteuerbaren bidirektionalen Leistungshalbleiterschaltern S5, S6 auf. Der jeweilige ansteuerbare bidirektionale Leistungshalbleiterschalter S5, S6 ist insbesondere gebildet durch einen Gate-Turn-Off Thyristor oder durch einen Bipolartransistor mit isoliert angeordneter Gateelektrode (IGBT) oder durch einen integrierten Thyristor mit kommutierter Ansteuerelektrode (IGCT) und durch eine zu dem Gate-Turn-Off Thyristor oder Bipolartransistor oder Thyristor mit kommutierter Ansteuerelektrode antiparallel geschaltete Diode. Es ist aber auch denkbar einen vorstehend genannten ansteuerbaren bidirektionalen Leistungshalbleiterschalter S5, S6 beispielsweise als Leistungs-MOSFET mit zusätzlich antiparallel geschalteter Diode auszuführen. Ein derart durch die vorstehend genannten ansteuerbaren bidirektionalen Leistungshalbleiterschalter S5, S6 realisierter Gleichrichter 1 generiert wechselspannungsseitig und gleichspannungsseitig bezüglich der Wechselspannung des elektrischen Wechselspannungsnetzes 2 mit Vorteil nur sehr geringe Oberschwingungen, so dass sich die Spannung am Gleichspannungskreis 3 zusätzlich in einem weiten Bereich einstellen lässt.

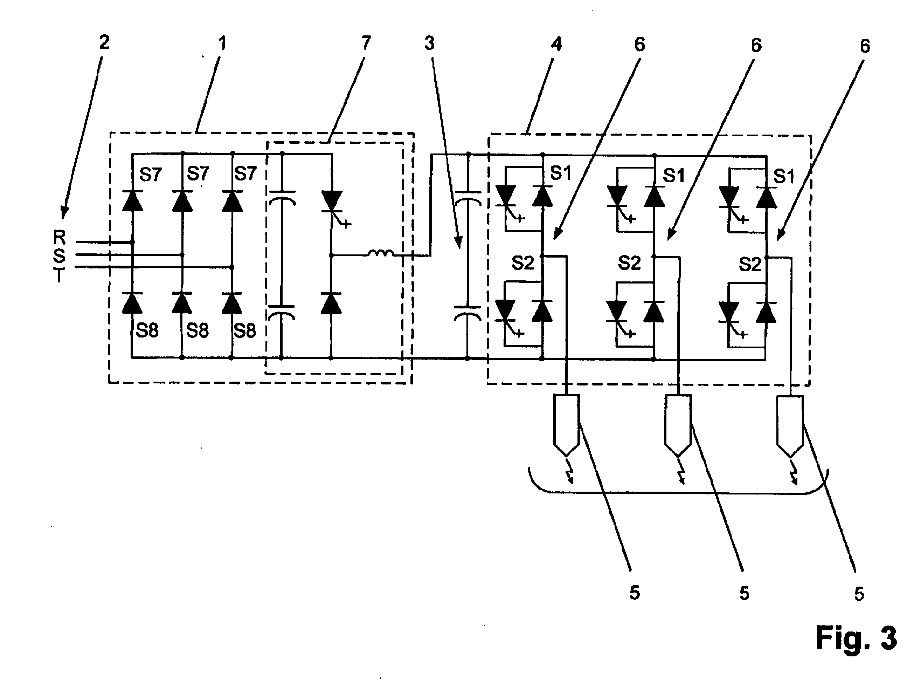

Alternativ zu den Ausführungsformen nach Fig. 1 und Fig. 2 weist der Gleichrichter 1 in einer dritten Ausführungsform der erfindungsgemässen Lichtbogenofenspeisevorrichtung gemäss Fig. 3 für jede Phase R, S, T des elektrischen Wechselspannungsnetzes 2 eine Serienschaltung aus zwei passiven nicht ansteuerbaren unidirektionalen Leistungshalbleiterschaltern S7, S8 auf. Der jeweilige passive nicht ansteuerbare unidirektionale Leistungshalbleiterschalter S7, S8 ist insbesondere gebildet durch eine Diode. Der gemäss Fig. 3 realisierte Gleichrichter 1 stellt eine äusserst robuste Lösung dar, da keinerlei Ansteuer- und Regelaufwand bezüglich der Leistungshalbleiterschalter S7, S8 besteht. Soll die Spannung und der Strom am Gleichspannungskreis 3 einstellbar sein, so ist gemäss Fig. 3 zusätzlich optional eine Stellereinheit 7 des Gleichrichters 1 zur Einstellung des Stromes und der Spannung des Gleichspannungskreises 3 vorzusehen, wie dies in Fig. 3 beispielhaft gezeigt ist. Wird keine solche Stellereinheit 7 vorgesehen, so sind die Serienschaltungen aus den jeweiligen zwei passiven nicht ansteuerbaren unidirektionalen Leistungshalbleiterschaltern S7, S8 parallel geschaltet und dann zudem parallel mit dem Gleichspannungskreis 3 verbunden.

Es sei erwähnt, dass sich die vorteilhafte rechteckförmige Wechselspannung für die Lichtbogenelektrode 4 auch mittels eines mit dem elektrischen Wechselspannungsnetz 2 verbindbaren Matrix-Umrichters realisieren lässt.

Vorteilhaft findet die vorstehend anhand von Fig. 1 bis Fig. 4 detailliert beschriebene erfindungsgemässe Lichtbogenofenspeisevorrichtung Verwendung in einem Lichtbogenofen.

### Bezugszeichenliste

- 1: Gleichrichter
- 2: elektrisches Wechselspannungsnetz
- 3: Gleichspannungskreis
- 4: Wechselrichter
- 5: Lichtbogenelektrode
- 6: Wechselrichterzweigpaar
- 7: Stellereinheit
- S1, S2: ansteuerbare bidirektionale Leistungshalbleiterschalter
- S3, S4: ansteuerbare unidirektionale Leistungshalbleiterschalter
- S5,S6: ansteuerbare bidirektionale Leistungshalbleiterschalter
- S7, S8: passive nicht ansteuerbare unidirektionale Leistungshalbleiterschalter

## Patentansprüche

1. Lichtbogenofenspeisevorrichtung mit einem Gleichrichter (1), welcher Gleichrichter (1) wechselspannungsseitig mit einem elektrischen Wechselspannungsnetz (2) verbindbar ist und gleichspannungsseitig mit einem Gleichspannungskreis (3) verbunden ist, mit einem Wechselrichter (4), welcher Wechselrichter (4) gleichspannungsseitig mit dem Gleichspannungskreis (3) und wechselspannungsseitig mit mindestens einer Lichtbogenelektrode (5) verbunden ist,
**dadurch gekennzeichnet,**
**dass** der Wechselrichter (4) als ein eine rechteckförmige Wechselspannung an die Lichtbogenelektrode (4) anlegender Wechselrichter ausgebildet ist.

2. Lichtbogenofenspeisevorrichtung nach Anspruch 1, **dadurch gekennzeichnet, dass** die Frequenz der rechteckförmigen Wechselspannung im wesentlichen der Frequenz der Wechselspannung des elektrischen Wechselspannungsnetzes (2) entspricht.

3. Lichtbogenofenspeisevorrichtung nach Anspruch 1 oder 2, **dadurch gekennzeichnet, dass** der Wechselrichter (4) für jede Lichtbogenelektrode (5) ein zugehöriges Wechselrichterzweigpaar (6) aufweist, wobei jedes Wechselrichterzweigpaar (6) zwei in Serie geschaltete ansteuerbare bidirektionale Leistungshalbleiterschalter (S1, S2) aufweist und die jeweilige Lichtbogenelektrode (5) mit dem Verbindungspunkt der zwei in Serie geschalteten ansteuerbaren bidirektionalen Leistungshalbleiterschalter (S1, S2) verbunden ist.

4. Lichtbogenofenspeisevorrichtung nach Anspruch 3, **dadurch gekennzeichnet, dass** im Falle mehrerer Lichtbagenelektroden (5) die zugehörigen Wechselrichterzweigpaare (6) parallel geschaltet sind.

5. Lichtbogenofenspeisevorrichtung nach einem der Ansprüche 1 bis 4, **dadurch gekennzeichnet, dass** der Gleichrichter (1) für jede Phase (R, S, T) des elektrischen Wechselspannungsnetzes (2) eine Serienschaltung aus zwei ansteuerbaren unidirektionalen Leistungshalbleiterschaltern (S3, S4) aufweist.

6. Lichtbogenofenspeisevorrichtung nach einem der Ansprüche 1 bis 4, **dadurch gekennzeichnet, dass** der Gleichrichter (1) für jede Phase (R, S, T) des elektrischen Wechselspannungsnetzes (2) eine Serienschaltung aus zwei ansteuerbaren bidirektionalen Leistungshalbleiterschaltem (S5, S6) aufweist.

7. Lichtbogenofenspeisevorrichtung nach einem der Ansprüche 1 bis 4, **dadurch gekennzeichnet, dass** der Gleichrichter (1) für jede Phase (R, S, T) des elektrischen Wechselspannungsnetzes (2) eine Serienschaltung aus zwei passiven nicht ansteuerbaren unidirektionalen Leistungshalbleiterschaltern (S7, S8) aufweist.

8. Lichtbogenofenspeisevorrichtung nach Anspruch 7, **dadurch gekennzeichnet, dass** der Gleichrichter (1) eine Stellereinheit (7) zur Einstellung des Stromes und der Spannung des Gleichspannungskreises (3) aufweist.

9. Lichtbogenofen, der eine Lichtbogenofenspeisevorrichtung nach einem der Ansprüche 1 bis 8 aufweist.

## Claims

1. An arc furnace power supply device with a rectifier (1), which rectifier (1) can be connected on the alternating voltage side with an electrical alternating voltage network (2), and is connected on the direct voltage side with a direct voltage circuit (3), with an inverter (4), which inverter (4) is connected on the direct voltage side with the direct voltage circuit (3), and on the alternating voltage side with at least one arc electrode (5),
**characterised in that** the inverter (4) is designed as an inverter that applies a rectangular alternating voltage to the arc electrode (5).

2. The arc furnace power supply device according to Claim 1, **characterised in that** the frequency of the rectangular alternating voltage essentially corresponds to the frequency of the alternating voltage in the electrical alternating voltage supply network (2).

3. The arc furnace power supply device according to Claim 1 or 2, **characterised in that** the inverter (4) for each arc electrode (5) has a related inverter branch pair (6), wherein each inverter branch pair (6) has two controllable bi-directional power semiconductor switches (S1, S2) connected in series, and the respective arc electrode (5) is connected with the connection point of the two controllable bi-directional power semiconductor switches (S1, S2) connected in series.

4. The arc furnace power supply device according to Claim 3, **characterised in that** in the event of a plurality of arc electrodes (5) the related inverter branch pairs (6) are connected in parallel.

5. The arc furnace power supply device according to one of the Claims 1 to 4, **characterised in that** the rectifier (1) has a series circuit consisting of two controllable unidirectional power semiconductor switches (S3, S4) for each phase (R, S, T) of the electrical alternating voltage network (2).

6. The arc furnace power supply device according to one of the Claims 1 to 4, **characterised in that** the rectifier (1) has a series circuit consisting of two controllable unidirectional power semiconductor switches (S3, S4) for each phase (R, S, T) of the electrical alternating voltage network (2).

7. The arc furnace power supply device according to one of the Claims 1 to 4, **characterised in that** the rectifier (1) has a series circuit consisting of two passive non-controllable unidirectional power semiconductor switches (S7, S8) for each phase (R, S, T) of the electrical alternating voltage network (2).

8. The arc furnace power supply device according to Claim 7, **characterised in that** the rectifier (1) has a control unit (7) for the adjustment of the current and voltage in the direct voltage circuit (3).

9. An arc furnace, which has an arc furnace power supply device according to one of the Claims 1 to 8.

## Revendications

1. Dispositif d'alimentation pour four à arc comportant un redresseur (1), lequel redresseur (1) peut être relié du côté de la tension alternative à un réseau électrique de tension alternative (2) et est relié du côté de la tension continue à un réseau de tension continue (3), comportant un onduleur (4), lequel onduleur (4) est relié du côté de tension continue au réseau de tension continue (3) et du côté de la tension alternative à au moins une électrode à arc électrique (5),
**caractérisé en ce que**
l'onduleur (4) est configuré comme un onduleur appliquant une tension alternative rectangulaire à l'électrode à arc électrique (4).

2. Dispositif d'alimentation pour four à arc selon la revendication 1, **caractérisé en ce que** la fréquence de la tension alternative rectangulaire correspond essentiellement à la fréquence de la tension alternative d'un réseau électrique de tension alternative (2).

3. Dispositif d'alimentation pour four à arc selon la revendication 1 ou 2, **caractérisé en ce que** l'onduleur (4) présente pour chaque électrode à arc électrique (5) une paire d'onduleurs (6) correspondante, moyennant quoi chaque paire d'onduleurs (6) présente deux disjoncteurs de puissance (S1,S2) bidirectionnels, pouvant être commandés et branchés en série et l'électrode à arc électrique (5) correspondante est reliée au point de liaison des deux disjoncteurs de puissance(S1,S2) bidirectionnels, pouvant être commandés et branchés en série.

4. Dispositif d'alimentation pour four à arc selon la revendication 3, **caractérisé en ce que** en cas de plusieurs électrodes à arc électrique (5), les paires d'onduleurs (6) correspondantes sont branchées en parallèle.

5. Dispositif d'alimentation pour four à arc selon une des revendications 1 à 4, **caractérisé en ce que** le redresseur (1) présente pour chaque phase (R,S,T) du réseau électrique de tension alternative (2) un branchement en série composé de deux disjoncteurs de puissance (S3,S4) unidirectionnels, pouvant être commandés.

6. Dispositif d'alimentation pour four à arc selon une des revendications 1 à 4, **caractérisé en ce que** le redresseur (1) présente pour chaque phase (R,S,T) du réseau électrique de tension alternative (2) un branchement en série composé de deux disjoncteurs de puissance (S5,S6) bidirectionnels, pouvant être commandés.

7. Dispositif d'alimentation pour four à arc selon une des revendications 1 à 4, **caractérisé en ce que** le redresseur (1) présente pour chaque phase (R,S,T) du réseau électrique de tension alternative (2) un branchement en série composé de deux disjoncteurs de puissance (S7,S8) unidirectionnels, passifs et ne pouvant pas être commandés.

8. Dispositif d'alimentation pour four à arc selon la revendication 7, **caractérisé en ce que** le redresseur (1) présente une unité de réglage (7) pour régler le courant et la tension du réseau de tension continue (3).

9. Four à arc, qui présente un dispositif d'alimentation pour four à arc selon une des revendications 1 à 8.
